(19) Europäisches Patentamt

European Patent Office

Office européen des brevets

(11) **EP 0 952 740 B1**

(12) **FASCICULE DE BREVET EUROPEEN**

(45) Date de publication et mention
de la délivrance du brevet:
**22.02.2006 Bulletin 2006/08**

(51) Int Cl.:
***H04N 11/18*** *(2006.01)*

(21) Numéro de dépôt: **99400953.8**

(22) Date de dépôt: **20.04.1999**

(54) **Démodulateur, en particulier de signal de chrominance SECAM, à double ajustage en fréquence**

Demodulator, insbesondere von SECAM-Chrominanzsignal, mit Frequenzdoppelabstimmungsvorrichtung

Demodulator, in particular of SECAM chrominance signal, with double frequency tuning

(84) Etats contractants désignés:
**DE FR GB IT**

(30) Priorité: **24.04.1998 FR 9805186**

(43) Date de publication de la demande:
**27.10.1999 Bulletin 1999/43**

(73) Titulaire: **STMicroelectronics S.A.**
**92120 Montrouge (FR)**

(72) Inventeurs:
• **Salle, Didier**
**38000 Grenoble (FR)**
• **Bret, Gérard**
**38130 Echirolles (FR)**

(74) Mandataire: **Audier, Philippe André et al**
**Brevalex,**
**3, rue du Docteur Lancereaux**
**75008 Paris (FR)**

(56) Documents cités:
**EP-A- 0 510 767      DE-A- 3 243 014**

• **PATENT ABSTRACTS OF JAPAN vol. 97, no. 7, 31 juillet 1997 (1997-07-31) & JP 09 065356 A (SANYO ELECTRIC CO LTD)**
• **PATENT ABSTRACTS OF JAPAN vol. 95, no. 9, 31 octobre 1995 (1995-10-31) & JP 07 143511 A (SANYO ELECTRIC CO)**

EP 0 952 740 B1

**Description**

Domaine technique

L'invention concerne un démodulateur de signal modulé en fréquence et en particulier de signal de chrominance SECAM.

Selon la norme SECAM, les informations de chrominance d'un signal vidéo sont transmises par modulation en fréquence de sous-porteuses de chrominance.

Le signal vidéo comporte une succession de lignes formant une image. Parmi ces lignes, deux lignes successives comportent respectivement une information correspondant à la composante rouge puis une information correspondant à la composante bleue d'une image trichrome.

Les sous-porteuses sur lesquelles sont codées les informations relatives au rouge et au bleu sont centrées sur des fréquences distinctes qui sont respectivement $F_{OR}$=4, 406 MHz pour le rouge et $F_{O8}$=4,250 MHz pour le bleu.

Des démodulateurs de signal de chrominance sont utilisés pour extraire du signal, et plus précisément des sous-porteuses modulées en fréquence, les informations relatives aux composantes rouge et bleue.

L'invention trouve ainsi des applications dans la réalisation de téléviseurs ou de récepteurs de signal vidéo, par exemple.

Un démodulateur de signaux de chrominance SECAM est décrit, par example, dans EP-A-0 510 767.

Etat de la technique antérieure

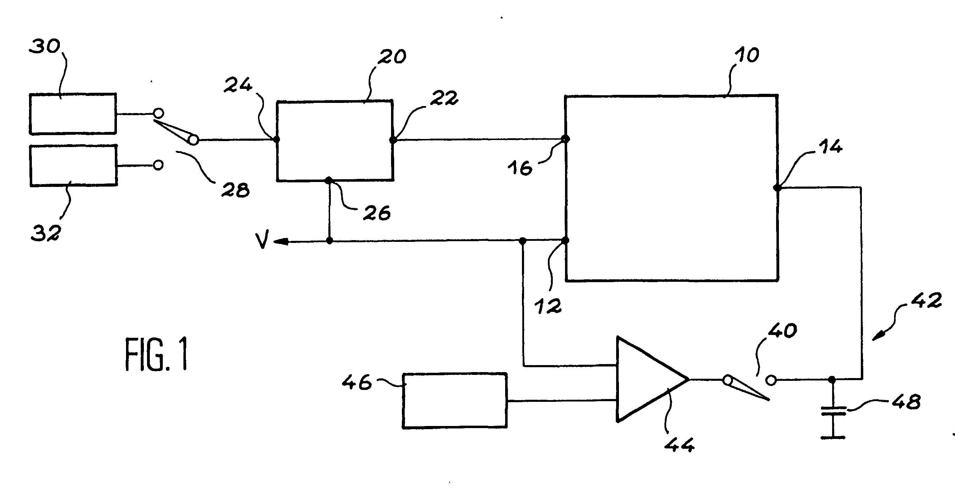

La figure 1 annexée illustre de façon schématique et simplifiée le principe de fonctionnement d'un démodulateur de signal de chrominance SECAM.

Le démodulateur de la figure 1 est utilisable pour démoduler les lignes comprenant des informations relatives à l'une des couleurs rouge ou bleu.

Le démodulateur comporte pour l'essentiel un oscillateur 10 à fréquence contrôlée et un comparateur de phase 20.

Au sens de la présente invention on entend par comparateur de phase un dispositif comprenant deux entrées de signaux et capable de délivrer un courant ou une tension proportionnelle à un écart de phase existant entre les deux signaux d'entrée.

L'oscillateur 10 est un oscillateur à fréquence contrôlée en tension (VCO) comprenant deux entrées 12, 14 appelées respectivement entrée de boucle et entrée d'ajustage, et une sortie 16 délivrant un signal dont la fréquence dépend des tensions appliquées aux entrées de boucle et d'ajustage.

L'entrée de boucle 12 de l'oscillateur 10 est reliée à une sortie 26 du comparateur de phase 20, tandis que la sortie 16 de l'oscillateur 10 est reliée à une première entrée 22 du comparateur de phase. Une deuxième entrée 24 du comparateur de phase est connectée à un commutateur 28 permettant de relier sélectivement la deuxième entrée soit à une voie de chrominance 30 transmettant le signal de chrominance, soit à un oscillateur extérieur de référence 32, à quartz, délivrant un signal à une fréquence de référence.

Le comparateur de phase associé à l'oscillateur forme une boucle de démodulation à verrouillage de phase de type PLL.

Lorsque le commutateur 28 relie la deuxième entrée 24 du comparateur de phase à la voie de chrominance 30, le démodulateur délivre à sa sortie une tension notée V proportionnelle à la fréquence du signal de chrominance, notée F.

La tension V est utilisée comme information représentative de la composante de couleur (bleu ou rouge) correspondant au signal présent sur la voie 30.

La tension V est telle que V=k.F.U, où k est un coefficient de proportionnalité et où U est une tension appliquée à l'entrée d'ajustage 14 de l'oscillateur.

La fréquence du signal de sortie émis par l'oscillateur 10 doit être déterminée avec une grande précision et rester stable pour garantir la précision de la tension de sortie V du démodulateur et donc garantir la fidélité de reproduction des couleurs par l'appareil équipé du démodulateur.

A cet effet, l'oscillateur 10 doit être fréquemment accordé sur une fréquence de référence, notée $F_{ref}$, fournie par l'oscillateur extérieur 32.

L'oscillateur 10 est accordé en reliant la deuxième entrée 24 du comparateur de phase à l'oscillateur extérieur de référence 32.

Lors d'une phase d'accord de l'oscillateur, un interrupteur 40 d'un circuit d'ajustage 42 est fermé. La phase d'accord peut être déclenchée, par exemple, par une information d'effacement de trame du signal vidéo, utilisée pour piloter le commutateur 28 et l'interrupteur 40.

Ce circuit comporte un transconducteur 44 dont une entrée est reliée à l'entrée de boucle 12 de l'oscillateur et dont l'autre entrée est reliée à une source de tension de référence 46 délivrant une tension $V_{ref}$.

Lorsque la tension à l'entrée de boucle de l'oscillateur 10 est différente de la tension de référence $V_{ref}$, le transconducteur délivre un courant (positif ou négatif) qui vient charger ou décharger un condensateur de mémoire 48.

Ainsi, la tension U du condensateur de mémoire 48, appliquée à l'entrée d'ajustage 14 de l'oscillateur, est modifiée pour ajuster la tension de sortie de l'oscillateur à une valeur telle que la tension de l'entrée de boucle de l'oscillateur devienne égale à $V_{ref}$.

Lors d'une phase de démodulation, l'interrupteur 40 est ouvert et la tension U ajustée est conservée aux bornes du condensateur 48.

On a ainsi $V_{ref}=kF_{ref}.U$

soit, $$U = \frac{V_{ref}}{k.\,F_{ref}}$$

On peut donc écrire :

$$V = k.\,F.\,U = k.\,F.\,\frac{V_{ref}}{k.\,F_{ref}} = \frac{V_{ref}}{F_{ref}}.\,F = H.\,F.$$

H est ici le gain de démodulation connu très précisément comme le rapport de la tension de référence sur la fréquence de référence.

Entre deux phases d'accord de l'oscillateur, la tension U doit être conservée de la façon la plus stable possible pour éviter toute altération dans la reproduction des couleurs.

En effet, une modification, même légère, de la tension d'ajustage U provoque une modification importante de la fréquence d'oscillation de l'oscillateur 10. Cette modification est d'autant plus importante que le gain de la boucle d'ajustage est important.

Ainsi, un courant de fuite du condensateur de mémoire 48 risque de perturber le fonctionnement de l'oscillateur.

Pour réduire l'influence des courants de fuite et pour garantir la stabilité de l'oscillateur entre deux phases d'accord, la capacité du condensateur de mémoire 48 est choisie importante. A titre d'exemple, la capacité du condensateur est choisie entre 10 et 100 nF.

De telles valeurs de capacité constituent un obstacle ou tout au moins un handicap pour l'intégration du condensateur avec les autres composants du démodulateur sous forme de circuit intégré.

Aussi, le condensateur 48 n'est généralement pas intégré sur la puce comportant le décodeur de signaux vidéo, mais se présente sous la forme d'un composant séparé.

<u>Exposé de l'invention</u>

La présente invention a pour but de proposer un démodulateur de signaux modulés en fréquence, et en particulier de signaux de chrominance SECAM, ne présentant pas les limitations mentionnées ci-dessus.

Un but est de proposer un tel démodulateur avec un condensateur de mémoire avec une faible capacité, particulièrement adapté à une réalisation sous forme de circuit intégré.

Un but est aussi de proposer un tel démodulateur avec un oscillateur particulièrement stable en fréquence et peu sensible à d'éventuels courants de fuite du condensateur de mémoire.

Pour atteindre ces buts, l'invention a plus précisément pour objet un dispositif démodulateur pour signal modulé en fréquence comprenant :

- un oscillateur à fréquence contrôlée, formant avec un comparateur de phase une boucle de démodulation, et
- des moyens d'ajustage de la fréquence de l'oscillateur en fonction d'une tension de charge d'un condensateur de mémoire, reliés à une entrée d'ajustage de l'oscillateur.

Conformément à l'invention, les moyens d'ajustage comportent :

- une voie d'ajustage fin pour délivrer à l'entrée d'ajustage de l'oscillateur une première valeur d'ajustage fonction de la tension de charge du condensateur de mémoire, et
- une voie d'ajustage grossier pour délivrer à l'entrée d'ajustage de l'oscillateur une deuxième valeur d'ajustage additionnée à la première valeur d'ajustage, la deuxième valeur d'ajustage étant augmentée lorsque la tension de charge du condensateur dépasse une tension de limitation haute et étant diminuée lorsque la tension de charge du condensateur est inférieure à une tension de limitation basse.

La tension de charge du condensateur peut être fixée, par des moyens appropriés, lors d'une phase d'accord de l'oscillateur, par exemple de la façon décrite précédemment en référence à la figue 1.

La voie d'ajustage grossier peut être prévue pour fournir une valeur d'ajustage qui correspond de préférence à une fraction majoritaire de la valeur d'ajustage totale appliquée à l'entrée de l'oscillateur. Cette valeur d'ajustage ne subit aucune variation parasite et est maintenue indépendamment de l'évolution de l'état de charge du condensateur entre deux phases d'accord de l'oscillateur.

La voie d'ajustage fin reste tributaire des variations de charge du condensateur de mémoire. Cependant, comme cette voie ne fournit qu'une partie (préférentiellement minoritaire) de la valeur d'ajustage, la valeur d'ajustage totale fournie à l'oscillateur reste peu sensible aux courants de fuite affectant éventuellement le condensateur de mémoire.

Ce condensateur peut donc être réalisé avec une valeur de capacité inférieure à celle usuellement mise en oeuvre dans l'état de la technique antérieure.

De plus, le condensateur peut alors être réalisé avec les autres composants du dispositif sous la forme de circuit intégré.

L'oscillateur du dispositif de l'invention peut être un oscillateur à fréquence contrôlée en tension, ou VCO (Voltage Controlled Oscillator), ou un oscillateur à fréquence contrôlée en courant, ou CCO (Current Controlled Oscillator). Dans le premier cas des tensions sont appliquées aux entrées de l'oscillateur et dans le second cas des courants sont appliqués aux entrées de l'oscillateur.

Ainsi le terme de "valeur d'ajustage" peut être compris comme une tension d'ajustage ou comme un courant d'ajustage selon le type d'oscillateur utilisé.

Dans une réalisation particulière de la voie d'ajustage fin, celle-ci peut comporter un amplificateur avec une entrée connectée au condensateur de mémoire, et une sortie, reliée à l'entrée d'ajustage de l'oscillateur, délivrant la première valeur d'ajustage, proportionnelle à la tension de charge du condensateur.

L'amplificateur peut être, par exemple, un amplificateur transconducteur pour convertir la tension de charge du condensateur en un courant d'ajustage pour un oscillateur de type CCO.

Selon une variante, le condensateur peut être relié directement, par l'intermédiaire d'un sommateur de tension, à l'entrée d'un oscillateur de type VCO. Le sommateur de tensions permet alors d'additionner des tensions d'ajustage provenant des voies d'ajustages grossier et fin.

La voie d'ajustage grossier peut comporter un convertisseur numérique-analogique relié à l'entrée d'ajustage de l'oscillateur pour délivrer une valeur d'ajustage correspondant à une valeur numérique codée, et des moyens pour modifier la valeur numérique lorsque la tension du condensateur de mémoire se situe hors de la plage de tensions comprise entre les tensions de limitation haute et basse.

Ainsi, de faibles chutes de tension du condensateur de mémoire, dues à des courants de fuite, et qui sont insuffisantes pour faire passer la tension de charge en-dessous de la tension de limitation basse, ne provoquent aucune modification de la valeur numérique codée.

La valeur numérique, stockée par exemple dans un registre de mémoire, peut donc être conservée inchangée entre deux phases d'accord de l'oscillateur, c'est-à-dire pendant les phases de démodulation. Les moyens pour modifier la valeur numérique en mémoire ne sont généralement actionnés que lors d'une phase d'accord de l'oscillateur, lorsque la tension de charge du condensateur n'est plus comprise dans la plage de tensions comprise entre les tensions de limitation haute et basse.

Dans une réalisation particulière des moyens pour modifier la valeur numérique mémorisée, ceux-ci peuvent comporter un premier comparateur pour comparer la tension de charge du condensateur de mémoire à une tension de limitation basse, et connecté au convertisseur pour diminuer la valeur numérique codée lorsque la tension de charge est inférieure à la valeur de limitation basse. Un deuxième comparateur est prévu pour comparer la tension de charge du condensateur à une tension de limitation haute et est connecté au convertisseur pour augmenter la valeur numérique codée lorsque la tension de charge est supérieure à la tension de limitation haute.

De préférence, l'augmentation et la diminution de la valeur numérique mémorisée ont lieu en réponse à des impulsions d'augmentation ou de diminution. Or, la sortie des comparateurs n'est pas une sortie impulsionnelle, mais une sortie continue (haut ou bas) reflétant la valeur de la tension de charge comparée à la tension de limitation correspondante.

Ainsi, les premier et deuxième comparateurs peuvent être couplés à un générateur d'impulsions d'horloge pour délivrer au convertisseur numérique analogique des impulsions de diminution, respectivement d'augmentation de la valeur numérique à chaque impulsion d'horloge jusqu'à ce que la tension de charge soit comprise entre les tensions de limitation basse et haute.

La valeur numérique peut être codée sur un nombre N de bits et être modifiée d'une quantité correspondant à un bit de plus faible poids lors de chaque impulsion. Le convertisseur numérique analogique est alors conçu pour qu'une modification de la valeur numérique d'une quantité correspondant à un bit de plus faible poids engendre une modification de la deuxième valeur d'ajustage inférieure à une modification maximale de la première valeur d'ajustage fournie par la voie d'ajustage fin en réponse à une variation de la tension de charge du condensateur égale à la différence entre la tension de limitation haute et la tension de limitation basse.

Les modifications de la deuxième valeur d'ajustage fournies en réponse à une modification de la valeur numérique supérieure à un bit de plus faible poids sont, de préférence, plus importantes que les modifications de la première valeur d'ajustage de la voie d'ajustage fin.

Selon un aspect particulier, le dispositif de l'invention peut comporter un amplificateur transconducteur avec les bornes d'entrée reliées aux bornes d'une résistance électrique parcourue par un courant électrique variant linéairement avec un courant appliqué à l'entrée de boucle de l'oscillateur, et avec une borne de sortie en courant pouvant être reliée au condensateur de mémoire lors d'une phase d'accord de l'oscillateur. Une telle réalisation est adaptée notamment à un oscillateur de type CCO. L'entrée de boucle de l'oscillateur est l'entrée connectée à la sortie du comparateur de phase pour former une boucle de démodulation. L'entrée de boucle de l'oscillateur constitue également la sortie du démodulateur.

Un interrupteur peut être actionné pour relier la sortie de l'amplificateur transconducteur au condensateur de mémoire lors de phases d'accord de l'oscillateur.

Lors de ces phases d'accord, l'entrée du comparateur de phase est reliée à un générateur de fréquence de référence.

Selon une variante correspondant à une réalisation incluant un oscillateur de type VCO, le dispositif peut aussi comporter un amplificateur transconducteur avec une première borne d'entrée reliée à l'entrée de boucle de l'oscillateur et une deuxième borne d'entrée reliée à une source de tension de référence, et avec une borne de sortie de courant reliée au condensateur de mémoire, par l'intermédiaire d'un interrupteur.

L'invention concerne aussi l'utilisation du dispositif tel que décrit ci-dessus comme démodulateur de signaux de chrominance SECAM.

D'autres caractéristiques et avantages de la présente invention ressortiront mieux de la description qui va suivre, en référence aux figures des dessins annexés. Cette description est donnée à titre purement illustratif et non limitatif.

Brève description des figures

- La figure 1, déjà décrite, est un schéma de principe simplifié d'un démodulateur de type connu.
- La figure 2 est un schéma simplifié d'un démodulateur selon une réalisation particulière conforme à l'invention.

Description détaillée de modes de mise en oeuvre de l'invention

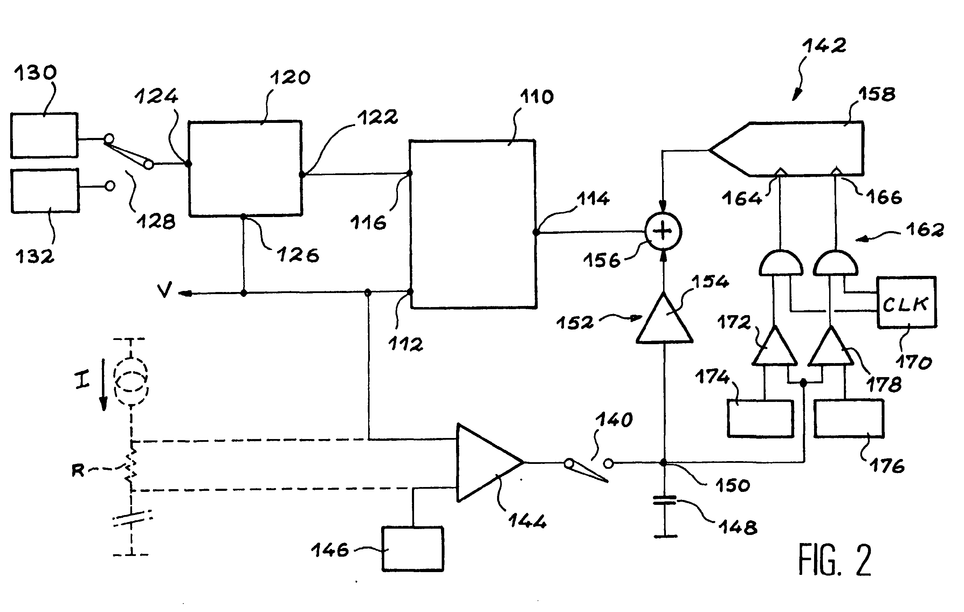

Des parties du dispositif de la figure 2, identiques, similaires ou équivalentes à des parties de la figure 1 déjà décrite, sont repérées avec les mêmes références auxquelles on a ajouté 100. Il est possible ainsi, pour ces parties de se reporter à la description qui précède.

Une première entrée 122 du comparateur de phase 120 est reliée à la sortie 116 de l'oscillateur 110 et la sortie 126 du comparateur de phase est reliée à l'entrée de boucle 112 de l'oscillateur qui constitue la sortie du démodulateur. Dans cet exemple, l'oscillateur 110 est du type VCO et la sortie du comparateur de phase est une sortie en tension. L'oscillateur et le comparateur de phase forment ainsi une boucle à verrouillage de phase.

Un commutateur 128 permet de relier la deuxième entrée 124 du comparateur de phase soit à une voie de chrominance 130 délivrant un signal SECAM à démoduler, soit à un oscillateur extérieur de référence, à quartz, 132 délivrant un signal à une fréquence de référence.

Le commutateur 128, piloté, par exemple par des signaux d'effacement de trame relie l'entrée du comparateur de phase à la voie de chrominance 130 pendant une phase de démodulation et à l'oscillateur extérieur 132 lors d'une phase d'accord de l'oscillateur.

Pendant la phase d'accord, un interrupteur 140 ferme un système 142 d'ajustage de la fréquence de l'oscillateur 110.

Le système 142 comporte un amplificateur transconducteur 144 avec une première entrée reliée à l'entrée 112 de l'oscillateur et une deuxième entrée reliée à un générateur de tension de référence 146.

La sortie de l'amplificateur transconducteur 144 délivre un courant, positif ou négatif, proportionnel à l'écart entre la tension d'entrée de l'oscillateur et la tension de référence. Ce courant est nul quand l'écart de tension est nul.

Selon une variante, dans laquelle l'oscillateur est de type CCO et dans laquelle le comparateur de phase délivre un courant à l'entrée de l'oscillateur, les bornes d'entrée de l'amplificateur transconducteur 146 peuvent être connectées aux bornes d'une résistance R parcourue par un courant proportionnel au courant d'entrée de l'oscillateur, ce courant étant fourni, par exemple par un miroir de courant. Cette variante est schématiquement représentée en trait discontinu.

La sortie de l'amplificateur 144 est reliée à une première borne 150 d'un condensateur de mémoire 148, l'autre borne du condensateur étant reliée à la masse par exemple.

Le courant fourni par l'amplificateur transconducteur 144 vient charger ou éventuellement décharger le condensateur de mémoire 148, en modifiant la tension à ses bornes.

Cette tension, ou une tension proportionnelle, peut constituer une première valeur d'ajustage pour l'oscillateur.

Ainsi, une première voie d'ajustage fin 152 du système d'ajustage 142 comporte un amplificateur de tension 154, connecté à la première borne 150 du condensateur 148 pour délivrer une tension proportionnelle à la tension du condensateur, fournie à l'entrée d'ajustage 114 de l'oscillateur. La sortie de l'amplificateur de tension 154 est reliée à l'entrée d'ajustage 114 par un additionneur de tension 156.

L'additionneur permet de faire la somme entre la tension d'ajustage fournie par la voie d'ajustage fin 152 et une deuxième tension d'ajustage. La deuxième tension d'ajustage est fournie par un convertisseur numérique-analogique 158 faisant partie d'une deuxième voie d'ajustage grossier 162 du système d'ajustage 142.

Le convertisseur numérique-analogique 158 conserve en mémoire une valeur numérique codée sur un nombre N de bits, par exemple 4, et délivre à sa sortie une tension pouvant prendre respectivement $2^N$ valeurs. Une première entrée d'impulsions 164 du convertisseur permet à chaque impulsion reçue, d'augmenter la valeur numérique codée d'un bit de plus faible poids tandis qu'une deuxième entrée d'impulsions 166 permet, à chaque impulsion reçue, de diminuer la valeur numérique codée d'un bit de plus faible poids.

Le convertisseur est conçu de telle sorte que la modification de la valeur numérique d'un bit de plus faible poids engendre une modification de la deuxième tension d'ajustage qui est inférieure à la modification maximale possible de la première tension d'ajustage de la première voie.

La première entrée d'impulsions 164 du convertisseur 158 reçoit la sortie d'un premier comparateur 172, cadencée par des impulsions d'une horloge 170.

Le comparateur 172 présente une entrée reliée à la première borne 150 du condensateur de mémoire 148, pour recevoir la tension de charge du condensateur et une entrée reliée à un générateur de tension 174 délivrant une tension de limitation haute.

Lorsque la tension de charge du condensateur dépasse la tension de limitation haute, le comparateur 172 présente un état de sortie activé et une impulsion est envoyée à la première entrée d'impulsions à chaque impulsion de l'horloge 170.

A l'inverse, lorsque la tension du condensateur de mémoire 148 est inférieure à une tension de limitation basse fournie par un générateur de tension 176, un deuxième comparateur 178, relié également à la première borne 150 du condensateur, présente un état de sortie activé. Des impulsions, cadencées par l'horloge 170 sont alors délivrées à la deuxième entrée d'impulsions 166.

Lorsque la tension du condensateur de mémoire 148 reste comprise entre les valeurs de limitation basse et haute, aucune impulsion n'est délivrée au convertisseur numérique-analogique et la valeur numérique mémorisée demeure inchangée.

Grâce à la voie d'ajustage grossier décrite ci-dessus, la valeur d'ajustage maximale que doit fournir la voie d'ajustage fin peut être réduite jusqu'à être $2^N$-1 fois plus faible que celle d'un circuit conforme à l'art antérieur. La valeur d'ajustage maximale fournie par la voie d'ajustage fin est égale au gain de l'amplificateur de tension 154 que multiplie l'écart entre les tensions de limitation basse et haute.

Ainsi, l'influence de courants de décharge parasites du condensateur est très réduite.

De plus, de faibles valeurs de capacité, de l'ordre de 100 à 200 pF suffisent pour réaliser le condensateur de mémoire du dispositif de l'invention.

**Revendications**

**1.** Dispositif démodulateur pour signal modulé en fréquence comprenant :

- un oscillateur (110) à fréquence contrôlée, formant avec un comparateur de phase (120) une boucle de démodulation, et
- des moyens (142) d'ajustage de la fréquence de l'oscillateur en fonction d'une tension de charge d'un condensateur de mémoire (148), reliés à une entrée d'ajustage (114) de l'oscillateur,

**caractérisé en ce que** les moyens d'ajustage (142) comportent :

- une voie (152) d'ajustage fin pour délivrer à l'entrée d'ajustage de l'oscillateur une première valeur d'ajustage fonction de la tension de charge du condensateur de mémoire, et

- une voie (162) d'ajustage grossier pour délivrer à l'entrée d'ajustage de l'oscillateur une deuxième valeur d'ajustage additionnée à la première valeur d'ajustage, la deuxième valeur d'ajustage étant augmentée lorsque la tension de charge du condensateur de mémoire (148) dépasse une tension de limitation haute et étant diminuée lorsque la tension de charge du condensateur est inférieure à une tension de limitation basse.

2. Dispositif selon la revendication 1, dans lequel la voie d'ajustage fin (152) comporte un amplificateur (154) avec une entrée connectée au condensateur de mémoire, et une sortie reliée à l'entrée d'ajustage de l'oscillateur, ladite sortie délivrant la première valeur d'ajustage, proportionnelle à la tension de charge du condensateur de mémoire.

3. Dispositif selon la revendication 1, dans lequel la voie (162) d'ajustage grossier comporte un convertisseur numérique-analogique (158) relié à l'entrée d'ajustage (114) de l'oscillateur (110) pour délivrer une valeur d'ajustage correspondant à une valeur numérique codée, et des moyens (170, 172, 174, 176, 178) pour modifier la valeur numérique lorsque la tension du condensateur de mémoire se situe hors d'une plage de tensions comprise entre les tensions de limitation haute et basse.

4. Dispositif selon la revendication 3, dans lequel les moyens pour modifier la valeur numérique codée comportent un premier comparateur (172) pour comparer la tension de charge du condensateur de mémoire (148) à une tension de limitation basse et connecté au convertisseur pour diminuer la valeur numérique codée lorsque la tension de charge est inférieure à la valeur de limitation basse, et un deuxième comparateur (178) pour comparer la tension de charge du condensateur (148) à une tension de limitation haute et connecté au convertisseur pour augmenter la valeur numérique codée lorsque la tension de charge est supérieure à la tension de limitation haute.

5. Dispositif selon la revendication 4, dans lequel les premier et deuxième comparateurs (172, 178) sont couplés à un générateur d'impulsion d'horloge (170) pour délivrer un convertisseur numérique analogique des impulsions de diminution, respectivement d'augmentation de la valeur numérique à chaque impulsion d'horloge jusqu'à ce que la tension de charge soit comprise entre les tensions de limitation basse et haute.

6. Dispositif selon la revendication 5, dans lequel la valeur numérique est codée sur un nombre N de bits et est modifiée d'une quantité correspondant à un bit de plus faible poids lors de chaque impulsion, le convertisseur numérique analogique (158) étant conçu pour qu'une modification de la valeur numérique d'une quantité correspondant à un bit de plus faible poids engendre une modification de la valeur d'ajustage inférieure à une modification de la valeur maximale d'ajustage fournie par la voie d'ajustage fin en réponse à une variation de la tension de charge du condensateur égale à la différence entre la tension de limitation haute et la tension de limitation basse.

7. Dispositif selon la revendication 1, dans lequel l'oscillateur (110) est un oscillateur à fréquence contrôlée en courant et dans lequel les première et deuxième valeurs d'ajustage sont des courants d'ajustage.

8. Dispositif selon la revendication 1, dans lequel l'oscillateur (110) est un oscillateur à fréquence contrôlée en tension et dans lequel les première et deuxième valeurs d'ajustage sont des tensions d'ajustage.

9. Dispositif selon la revendication 7, comprenant un amplificateur transconducteur (144) avec les bornes d'entrée reliées aux bornes d'une résistance électrique parcourue par un courant électrique variant linéairement avec un courant appliqué à une entrée de boucle de l'oscillateur, et avec une borne de sortie en courant pouvant être reliée au condensateur de mémoire (148) lors d'une phase d'accord de l'oscillateur.

10. Dispositif selon la revendication 8, comprenant un amplificateur transconducteur (144) avec une première borne d'entrée reliée à une entrée de boucle de l'oscillateur et une deuxième borne d'entrée reliée à une source de tension de référence (146), et avec une borne de sortie de courant pouvant être reliée au condensateur de mémoire (148) lors d'une phase d'accord de l'oscillateur.

11. Utilisation du dispositif de la figure 1 comme démodulateur d'un signal de chrominance SECAM.

**Patentansprüche**

1. Demodulatorvorrichtung für ein frequenzmoduliertes Signal, die umfasst:

- einen Oszillator (110) mit gesteuerter Frequenz, der mit einem Phasenkomparator (120) eine Demodulationsschleife bildet, und
- Mittel (142) zum Einstellen der Frequenz des Oszillators in Abhängigkeit von einer Ladespannung eines Speicherkondensators (148), die mit einem Einstelleingang (114) des Oszillators verbunden sind,

**dadurch gekennzeichnet, dass** die Einstellmittel (142) umfassen:

- einen Feineinstellweg (152), um an den Einstelleingang des Oszillators einen ersten Einstellwert zu liefern, der von der Ladespannung des Speicherkondensators abhängt, und
- einen Grobeinstellweg (162), um an den Einstelleingang des Oszillators einen zweiten Einstellwert zu liefern, der zu dem ersten Einstellwert addiert wird, wobei der zweite Einstellwert erhöht wird, wenn die Ladespannung des Speicherkondensators (148) eine obere Grenzspannung übersteigt, und emiedrigt wird, wenn die Ladespannung des Kondensators niedriger ist als eine untere Grenzspannung.

2. Vorrichtung nach Anspruch 1, bei der der Feineinstellweg (152) einen Verstärker (154) umfasst, der einen mit dem Speicherkondensator verbundenen Eingang und einen mit dem Einstelleingang des Oszillators verbundenen Ausgang besitzt, wobei der Ausgang den ersten Einstellwert liefert, der zu der Ladespannung des Speicherkondensators proportional ist.

3. Vorrichtung nach Anspruch 1, bei der der Grobeinstellweg (162) einen Digital/Analog-Umsetzer (158), der mit dem Einstelleingang (114) des Oszillators (110) verbunden ist, um einen einem codierten digitalen Wert entsprechenden Einstellwert zu liefern, und Mittel (170, 172, 174, 176, 178), um den digitalen Wert zu modifizieren, wenn die Spannung des Speicherkondensators außerhalb eines zwischen der oberen und unteren Grenzspannung liegenden Spannungsbereichs liegt, umfasst.

4. Vorrichtung nach Anspruch 3, bei der die Mittel zum Modifizieren des codierten digitalen Wertes einen ersten Komparator (172), der die Ladespannung des Speicherkondensators (148) mit einer unteren Grenzspannung vergleicht und mit dem Umsetzer verbunden ist, um den codierten digitalen Wert zu verringem, wenn die Ladespannung kleiner als der untere Grenzwert ist, und einen zweiten Komparator (178), der die Ladespannung des Kondensators (148) mit einer oberen Grenzspannung vergleicht und mit dem Umsetzer verbunden ist, um den codierten digitalen Wert zu erhöhen, wenn die Ladespannung größer als die obere Grenzspannung ist, umfassen.

5. Vorrichtung nach Anspruch 4, bei der der erste und der zweite Komparator (172, 178) mit einem Taktimpulsgenerator (170) gekoppelt sind, um an einen Digital/Analog-Umsetzer bei jedem Taktimpuls Emiedrigungs- bzw. Erhöhungsimpulse für den digitalen Wert zu liefern, bis die Ladespannung im Bereich zwischen der unteren und der oberen Grenzspannung liegt.

6. Vorrichtung nach Anspruch 5, bei der der digitale Wert mit einer Anzahl N von Bits codiert ist und bei jedem Impuls mit einer Größe, die einem niedrigstwertigen Bit entspricht, modifiziert wird, wobei der Digital/Analog-Umsetzer (158) so beschaffen ist, dass eine Modifikation des digitalen Wertes mit einer einem niedrigstwertigen Bit entsprechenden Größe eine Modifikation des unteren Einstellwerts mit einer Modifikation des maximalen Einstellwerts, die von dem Feineinstellweg in Reaktion auf eine Änderung der Ladespannung, die gleich der Differenz zwischen der oberen Grenzspannung und der unteren Grenzspannung ist, geliefert wird, zur Folge hat.

7. Vorrichtung nach Anspruch 1, bei der der Oszillator (110) ein Oszillator mit stromgesteuerter Frequenz ist und bei der der erste und der zweite Einstellwert Einstellströme sind.

8. Vorrichtung nach Anspruch 1, bei der der Oszillator (110) ein Oszillator mit spannungsgesteuerter Frequenz ist und bei der der erste und der zweite Einstellwert Einstellspannungen sind.

9. Vorrichtung nach Anspruch 7, die einen Transkonduktanz-Verstärker (144) umfasst, dessen Eingangsanschlüsse mit den Anschlüssen eines elektrischen Widerstandes verbunden sind, durch den ein elektrischer Strom fließt, der sich linear mit einem Strom ändert, der in einen Eingang der Oszillatorschleife eingegeben wird, und der einen Stromausgangsanschluss besitzt, der bei einer Abstimmphase des Oszillators mit dem Speicherkondensator (148) verbunden werden kann.

10. Vorrichtung nach Anspruch 8, die einen Transkonduktanz-Verstärker (144) umfasst, wovon ein erster Eingangsanschluss mit einem Eingang der Oszillatorschleife verbunden ist und ein zweiter Eingangsanschluss mit einer Referenzspannungsquelle (146) verbunden ist und wovon ein Stromausgangsanschluss bei einer Abstimmphase des Oszillators mit dem Speicherkondensator (148) verbunden werden kann.

**11.** Verwendung der Vorrichtung nach Anspruch 1 als Demodulator für ein SECAM-Chrominanzsignal.

**Claims**

**1.** Demodulating device for a frequency modulated signal comprising:

- an oscillator (110) with controlled frequency, forming a demodulation loop with a phase comparator (120), and
- means (142) of adjusting the oscillator frequency as a function of a charge voltage of a memory capacitor (148) connected to an oscillator adjustment input (114),

**characterized in that** the adjustment means (142) comprise:

- a fine adjustment channel (152) to output a first adjustment value at the oscillator adjustment input, that depends on the charge voltage of the memory capacitor, and
- a coarse adjustment channel (162) to output a second adjustment value added to the first adjustment value at the oscillator input, the second adjustment value being increased when the charge voltage of the memory capacitor (148) exceeds a high limitation voltage and being reduced when the capacitor charge voltage is below a low limitation voltage.

**2.** Device according to claim 1, in which the fine adjustment channel (152) comprises an amplifier (154) with an input connected to the memory capacitor, and an output connected to the oscillator adjustment input, the said output producing the first adjustment value proportional to the memory capacitor charge voltage.

**3.** Device according to claim 1, in which the coarse adjustment channel (162) comprises a digital-analog converter (158) connected to the adjustment input (114) of the oscillator (110) to output an adjustment value corresponding to a coded digital value, and means (170, 172, 174, 176, 178) of modifying the digital value when the voltage of the memory capacitor is outside a voltage range between the high and low limitation voltages.

**4.** Device according to claim 3, in which the means of modifying the coded digital value comprise a first comparator (172) for comparing the charge voltage of the memory capacitor (148) with a low limitation voltage connected to the converter to reduce the coded digital value when the charge voltage is less than the low limitation value, and a second comparator (178) to compare the charge voltage of the capacitor (148) with a higher limitation voltage and connected to the converter to increase the coded digital value when the charge voltage exceeds the high limitation voltage.

**5.** Device according to claim 4, in which the first and second comparators (172, 178) are coupled to a clock pulse generator (170) to output pulses to the digital-analog converter to reduce or increase the digital value at each clock pulse, until the charge voltage is between the low and high limitation voltages.

**6.** Device according to claim 5, in which the digital value is coded on a number N of bits and is modified by a quantity corresponding to a lower order bit in each pulse, the digital-analog converter (158) being designed such that a modification to the digital value of a quantity corresponding to a lower order bit will modify the adjustment value less than a modification of the maximum adjustment value output by the fine adjustment channel in response to a variation in the voltage of the capacitor charge equal to the difference between the high limitation voltage and the low limitation voltage.

**7.** Device according to claim 1, in which the oscillator (110) is a current controlled oscillator and in which the first and second adjustment values are adjustment currents.

**8.** Device according to claim 1, in which the oscillator (110) is a voltage controlled oscillator and in which the first and second adjustment values are adjustment voltages.

**9.** Device according to claim 7 comprising a transconductor amplifier (144) with input terminals connected to the terminals of an electric resistance through which an electric current passes varying linearly with a current applied to an input of the oscillator loop, and with a current output terminal that can be connected to the memory capacitor (148) during an oscillator matching phase.

10. Device according to claim 8, comprising a transconductor amplifier (144) with a first input terminal connected to an input to the oscillator loop and a second input terminal connected to a reference voltage source (146), and with a current output terminal that can be connected to the memory capacitor (148) during an oscillator matching phase.

11. Use of the device in figure 1 as a SECAM chrominance signal demodulator.

FIG. 1

EP 0 952 740 B1

FIG. 2

EP 0 952 740 B1